# EUROPEAN PATENT APPLICATION

(11) **EP 4 769 702 A1**
(43) Date of publication of application: **01.07.2026**
(21) Application number: 25866265.9
(22) Date of filing: 10.09.2025
(51) Int. Cl.: H01M 50/184, H01M 50/186, H01M 50/167, H01M 50/152, H01M 50/249

(54) **SEALING GASKET, BATTERY CELL, BATTERY PACK AND VEHICLE COMPRISING SAME**

(30) Priority: 11.09.2024 KR 20240123695
(71) Applicant: LG Energy Solution, Ltd., Seoul 07335 (KR)
(72) Inventor: PARK, Chanhyeok, Daejeon 34122 (KR)
(74) Representative: Goddar, Heinz J.
(86) International application number: PCT/KR2025/014075
(87) International publication number: WO 2026/059306

(57) **Abstract**

A sealing gasket capable of improving sealing force and electrolyte leakage prevention performance of a battery cell and effectively preventing electrolyte leakage due to deformation caused by a crimping process, and a battery cell including the same are disclosed. A battery cell according to an embodiment of the present disclosure comprises: a battery housing configured to accommodate an electrode assembly of a secondary battery and having an opening at one side; a battery cap coupled to the battery housing to cover the opening of the battery housing; and a sealing gasket surrounding the battery cap to seal a space between the battery cap and the battery housing. The sealing gasket and an upper end of the battery housing are configured to be bent by a crimping process to wrap around a rim of the battery cap. The sealing gasket has a groove in a portion corresponding to an upper surface corner of the rim of the battery cap.

## Description

### [TECHNICAL FIELD]

The present disclosure relates to a sealing gasket, a battery cell, a battery pack, and a vehicle including the same.

### [BACKGROUND ART]

Secondary batteries are attracting significant attention as an energy source for improving environmental sustainability and energy efficiency, owing not only to their high energy density and their remarkable potential to reduce fossil fuel consumption, but also to the advantage of producing no byproducts during energy utilization. Due to these advantages, secondary batteries are widely applied not only to portable devices but also to electric vehicles (EVs) and hybrid electric vehicles (HEVs) driven by electric power sources.

When a high output voltage is required, a plurality of unit secondary battery cells, i.e., battery cells, are connected in series to configure a battery pack. In addition, depending on the required charge/discharge capacity of the battery pack, a plurality of battery cells may be electrically connected in parallel to form the battery pack. The number of battery cells included in the battery pack may be variously set depending on the required output voltage and/or charge/discharge capacity.

A battery cell includes an electrode assembly including a positive electrode, a negative electrode, and a separator, and a battery housing that accommodates the electrode assembly. The battery housing is filled with an electrolyte to enable chemical reactions to occur smoothly at the electrodes through the movement of ions. To prevent leakage of the electrolyte injected into the battery housing, a sealing gasket for sealing is provided on the battery housing of the battery cell.

The sealing gasket is bent by a crimping process together with the upper part of the battery housing to seal the space between the rim portion of the battery cap of the battery cell and the battery housing. As such crimping and sizing processes are performed, deformation occurs in the sealing gasket. If a minute gap is created between the battery cap and the sealing gasket due to deformation of the sealing gasket, there is a risk of electrolyte leaking from the battery housing.

Accordingly, a technology is required that can strengthen the sealing force of a sealing gasket regardless of the crimping process or sizing process to more reliably prevent leakage of electrolyte filled inside a battery housing. The background technology described above is intended to explain the background from which the present disclosure was derived, and does not mean that it is prior art known before the filing of the present disclosure.

### [SUMMARY OF THE INVENTION]

### [TECHNICAL PROBLEM]

The present disclosure aims to provide a sealing gasket that enhances the sealing force and electrolyte-leakage prevention performance of a battery cell, and effectively prevents electrolyte leakage caused by deformation during a crimping process, as well as a battery cell including the same.

In addition, the present disclosure is to maintain alignment between a battery cap and a sealing gasket during a crimping process, to allow the crimping process to be performed at a correct position, and to prevent lifting and abnormal sealing of the sealing gasket, thereby enhancing the sealing performance of a battery cell.

The technical problems to be solved by the present disclosure are not confined to the foregoing description, and additional problems apparent to those skilled in the art will become evident from the following detailed description.

### [SOLUTION TO THE PROBLEM]

A battery cell according to one embodiment of the present disclosure comprises: a battery housing configured to accommodate an electrode assembly of a secondary battery and having an opening at one side; a battery cap coupled to the battery housing to cover the opening of the battery housing; and a sealing gasket surrounding the battery cap to seal a space between the battery cap and the battery housing.

The sealing gasket and the upper part of the battery housing are configured to be bent by a crimping process to wrap around the rim of the battery cap.

The sealing gasket has a groove in a portion corresponding to an upper surface corner of the rim of the battery cap.

The groove may be formed to be inclined upward in a direction away from the rim of the battery cap.

One end of the groove located on the inner surface of the sealing gasket may be configured to be in contact with the upper surface corner of the rim of the battery cap.

The groove may be formed at an angle of 30° to 60° with respect to a horizontal plane parallel to the upper surface of the battery cap.

The groove may be formed such that the depth from one end to the other end is 30% to 70% of the thickness of the sealing gasket defined based on the direction of the groove.

The above sealing gasket may have a plurality of grooves at a portion corresponding to the upper surface corner of the rim of the battery cap. The plurality of said grooves may include a first groove and a second groove formed above the first groove.

Before the crimping process, the first groove may be formed at a first angle with respect to the horizontal direction, and the second groove may be formed at a second angle greater than the first angle with respect to the horizontal direction.

The width of the groove may change along the depth direction of the groove based on the time before the crimping process. The width of the groove may decrease linearly or non-linearly as the depth increases from the inner surface of the sealing gasket.

The above sealing gasket may have a sealing reinforcing protrusion formed to protrude along the inner circumference of the sealing gasket below the groove.

The sealing reinforcing protrusion can be formed at a position in contact with a side perpendicular to the upper surface and lower surface of the rim of the battery cap.

The battery cap may have a sealing reinforcement groove formed as a recess to be form-fitted to the sealing reinforcement protrusion on the side of the battery cap.

The vertical dimension of the sealing reinforcing protrusion may be formed to be 10% to 30% of the thickness of the rim portion of the battery cap.

The above sealing gasket may have a plurality of sealing reinforcing protrusions along the inner circumference of the above sealing gasket. The plurality of sealing reinforcing protrusions may include a first sealing reinforcing protrusion and a second sealing reinforcing protrusion formed above the first sealing reinforcing protrusion.

The above battery cap may have a plurality of sealing reinforcing grooves on the side of the above battery cap. The plurality of sealing reinforcing grooves may include a first sealing reinforcing groove formed in a concave shape at a position corresponding to the first sealing reinforcing protrusion; and a second sealing reinforcing groove formed in a concave shape at a position corresponding to the second sealing reinforcing protrusion.

In another embodiment of the present disclosure, the battery cap may have a sealing reinforcing protrusion formed to protrude along the outer circumference of the side surface of the battery cap. In this case, the sealing gasket may have a sealing reinforcing groove formed as a recess to be form-fitted to the sealing reinforcing protrusion along the inner circumference.

According to an embodiment of the present disclosure, there is provided a battery pack comprising at least one battery cell.

Additionally, according to an embodiment of the present disclosure, a vehicle including at least one battery pack is provided.

According to one embodiment of the present disclosure, a sealing gasket is applied to a battery cell having a battery housing that accommodates an electrode assembly and a battery cap that covers an opening of the battery housing, the sealing gasket comprising: a lower gasket formed in a circular ring shape to support a lower surface of the rim of the battery cap; an intermediate gasket extending upward from an outer diameter of the lower gasket to contact a side surface of the battery cap and formed perpendicularly to an upper surface of the lower gasket; an upper gasket provided to extend above the intermediate gasket and having a thickness that changes in a vertical direction; and a groove provided at a connection portion between the intermediate gasket and the upper gasket to seal a gap between the battery cap and the battery housing.

The upper gasket may be arranged to be bent to surround the rim of the battery cap by a crimping process.

The groove may be formed from the inner surface of the sealing gasket toward the inside of the sealing gasket at a portion corresponding to the upper surface corner of the rim of the battery cap.

The groove may be formed to slope upward from the inner surface of the sealing gasket toward the inside of the sealing gasket.

The above intermediate gasket may have a sealing reinforcing protrusion formed to protrude along the inner circumference of the intermediate gasket at the lower portion of the groove.

### [ADVANTAGEOUS EFFECTS OF THE INVENTION]

According to an embodiment of the present disclosure, the sealing force and electrolyte leakage prevention performance of a battery cell can be improved, and electrolyte leakage due to deformation of a sealing gasket caused by a crimping process can be effectively prevented.

In addition, according to an embodiment of the present disclosure, alignment between a battery cap and a sealing gasket can be maintained during a crimping process, the crimping process can be performed at the correct position, and lifting of the sealing gasket and abnormal sealing can be prevented, thereby enhancing the sealing performance of the battery cell.

However, the advantageous effects of the present disclosure are not limited to those described above, and other technical effects not expressly mentioned will be readily understood by those skilled in the art from the following description.

### [BRIEF DESCRIPTION OF DRAWINGS]

FIG. 1 is a perspective view of a battery cell according to an embodiment of the present disclosure.
FIG. 2 is a longitudinal cross-sectional perspective view of the battery cell according to the embodiment of FIG. 1.
FIG. 3 is a longitudinal cross-sectional view of the battery cell according to the embodiment of FIG. 1.
FIG. 4 is an enlarged view of part 'A' of FIG. 3.
FIG. 5 is a cross-sectional view showing a sealing gasket and a battery cap constituting a battery cell according to an embodiment of the present disclosure.
FIG. 6 is a cross-sectional view showing the shape of a sealing gasket before the crimping process according to an embodiment of the present disclosure.
FIG. 7 is a cross-sectional view showing a portion of a battery cap constituting a battery cell according to an embodiment of the present disclosure.
FIGS. 8 to 10 are drawings showing that the shape of a sealing gasket is deformed as a crimping process progresses according to an embodiment of the present disclosure.
FIG. 11 is a drawing showing a sizing process in progress according to an embodiment of the present disclosure.
FIG. 12 is a drawing for explaining the shape of a groove and a sealing reinforcing protrusion of a sealing gasket constituting a battery cell according to an embodiment of the present disclosure.
FIG. 13 is a drawing showing a state in which a sealing gasket constituting a battery cell according to an embodiment of the present disclosure is deformed by a crimping process.
FIG. 14 is an enlarged view of a groove portion of a sealing gasket and a sealing reinforcing projection and a sealing reinforcing groove of a battery cap according to an embodiment of the present disclosure.
FIG. 15 is a drawing showing a groove portion of a sealing gasket according to another embodiment of the present disclosure.
FIG. 16 and FIG. 17 are drawings showing a groove portion of a sealing gasket according to another various embodiment of the present disclosure.
FIG. 18 is a drawing for explaining a sealing reinforcing protrusion of a sealing gasket according to another embodiment of the present disclosure.
FIG. 19 is a drawing for explaining a sealing reinforcing protrusion of a sealing gasket and a sealing reinforcing groove of a battery cap according to another embodiment of the present disclosure.
FIG. 20 is a cutaway perspective view of a battery cell according to an embodiment of the present disclosure.
FIG. 21 is a cross-sectional view of the battery cell according to the embodiment of FIG. 20.
FIG. 22 is a view illustrating a battery pack including the battery cell according to an embodiment of the present disclosure.
FIG. 23 is a view illustrating a vehicle including the battery cell according to an embodiment of the present disclosure.

### [MODES FOR CARRYING OUT THE INVENTION]

The advantages and features of the present disclosure, and methods for achieving the same, will become apparent from the following detailed description of embodiments taken in conjunction with the accompanying drawings. However, the present disclosure is not limited to the embodiments disclosed below, but may be implemented in various other forms. The embodiments are provided merely to ensure a complete disclosure of the present disclosure and to fully inform those skilled in the art of the scope of the invention. The present disclosure is defined only by the scope of the appended claims. Therefore, in some embodiments, well-known process steps, well-known device structures, and well-known technologies are not described in detail to avoid obscuring the present disclosure. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it may be disposed directly on the other element or one or more intervening elements may be present therebetween. Conversely, when a part is referred to as being "directly on" another part, it means that there is no intervening part therebetween. Also, when an element such as a layer, film, region, or plate is referred to as being "under" another element, it may be disposed directly beneath the other element or with one or more intervening elements may be present therebetween. Conversely, when a part is referred to as being "directly under" another part, it is to be understood that there are no intervening parts.

A battery cell according to an embodiment of the present disclosure is provided with a groove that takes into account deformation during a crimping process on the inner surface of a sealing gasket that contacts the rim portion of the battery cap so as to seal between the battery cap and the battery housing. The groove is formed on the inner surface of the sealing gasket corresponding to the upper surface corner of the rim of the battery cap. To effectively prevent electrolyte leakage due to deformation of the sealing gasket caused by the crimping process, the groove is formed to slope upward in a direction away from the rim of the battery cap (radially).

In addition, in the battery cell according to the embodiment of the present disclosure, a sealing reinforcing protrusion is formed below the groove in the inner part of the sealing gasket that comes into contact with the side of the rim portion of the battery cap. A sealing reinforcing groove is formed on the side of the rim portion of the battery cap to be form-fitted to the sealing reinforcing protrusion of the sealing gasket. The sealing reinforcing projections of the sealing gasket and the sealing reinforcing grooves of the battery cap ensure alignment between the battery cap and the sealing gasket during the crimping process, thereby allowing the crimping process to proceed at an accurate position, and prevent lifting and abnormal sealing of the sealing gasket, thereby contributing to reinforcing the sealing performance of the battery cell.

For convenience of explanation, the direction corresponding to the longitudinal direction of the winding axis of the electrode assembly wound in a jelly-roll form is referred to as the 'axial direction', 'upper-lower direction', or 'height direction' in this specification. And the direction surrounding the winding axis is referred to as the 'circumferential direction' or 'peripheral direction'. The direction toward or away from the winding axis is referred to as the 'radial direction. The direction approaching the winding axis in the radial direction can be referred to as the 'centripetal direction', and the direction away from the winding axis can be referred to as the 'centrifugal direction'.

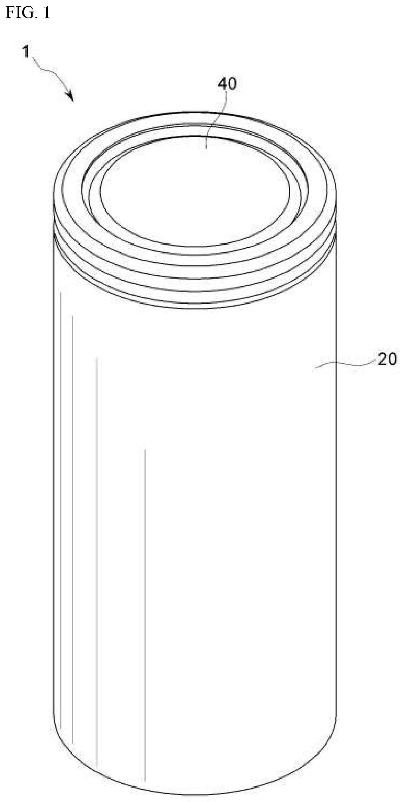

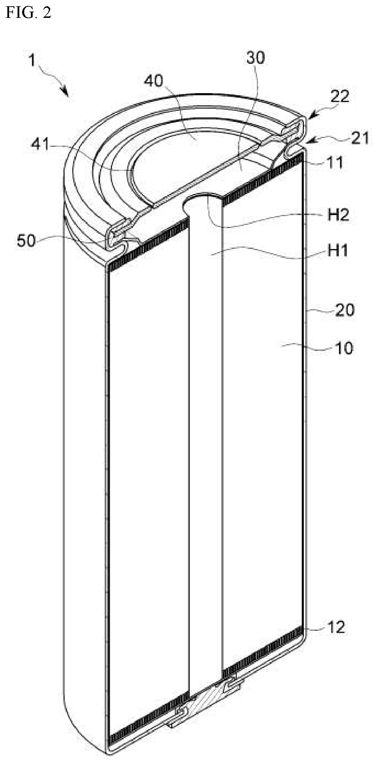

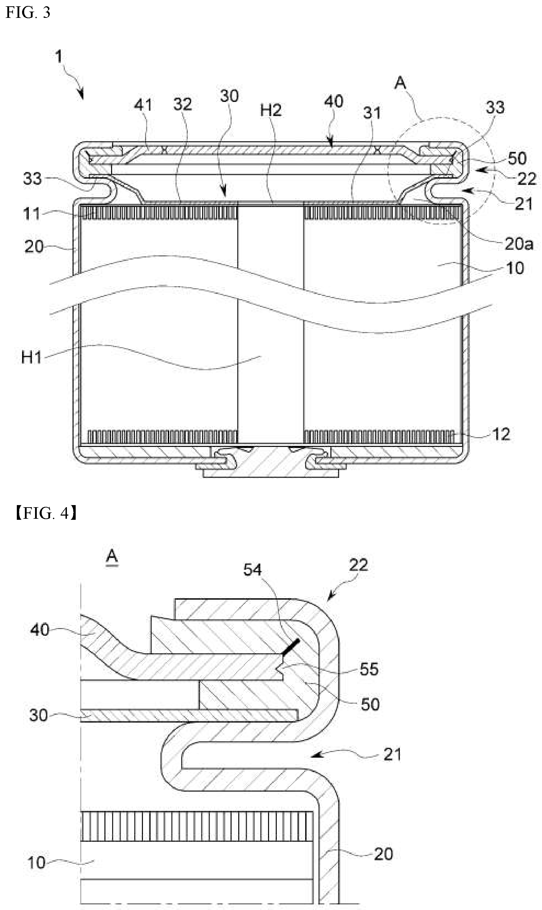

FIG. 1 is a perspective view of a battery cell according to an embodiment of the present disclosure. FIG. 2 is a longitudinal cross-sectional perspective view of the battery cell according to the embodiment of FIG. 1. FIG. 3 is a longitudinal cross-sectional view of the battery cell according to the embodiment of FIG. 1. Referring to FIGS. 1 to 3, a battery cell 1 according to one embodiment of the present disclosure includes an electrode assembly 10, a battery housing 20, a current collector 30, a battery cap 40, and a sealing gasket 50. The battery cell of the present disclosure is not limited to the shapes illustrated in FIGS. 1 to 3 and may also be applied to battery cells of other configurations. To avoid obscuring the gist of the invention, components for electrical connection-such as bus bars, cooling units, and power terminals-are omitted from the drawings.

A battery cell 1 according to one embodiment of the present disclosure may be a cylindrical secondary battery (cylindrical battery cell). The electrode assembly 10 may be formed in a cylindrical shape having a core and an outer circumferential surface by winding a first electrode (e.g., a negative electrode), a second electrode (e.g., a positive electrode), and a separator interposed therebetween around a winding axis. The electrode assembly 10 may be of a jelly-roll type. An additional separator may be provided on the outer circumferential surface of the electrode assembly 10 for insulation from the battery housing 20. The electrode assembly 10 may have a winding structure well known in the art without limitation.

The first electrode comprises a first electrode current collector and a first electrode active material coated on one or both surfaces of the first electrode current collector. At one end (upper end) in the width direction of the first electrode (parallel to the height direction of the battery cell shown in FIG. 1), there is an uncoated portion where the first electrode active material is not applied. That is, along the winding direction, the first electrode includes an uncoated portion exposed outside the separator at one longitudinal end where no active material is coated. The uncoated portion functioning as the first electrode tab is referred to as a first uncoated portion 11. The first uncoated portion 11 is provided at the upper side with respect to the height direction of the electrode assembly 10 accommodated in the battery housing 20. At least a part of the first uncoated portion 11 itself is used as an electrode tab. The first uncoated portion 11 may be, for example, a negative-electrode tab.

The second electrode comprises a second electrode current collector and a second electrode active material coated on one or both surfaces of the current collector. Based on the width (height) direction of the second electrode, there is an uncoated portion at the opposite end where the second electrode active material is not applied. That is, in the winding direction, the second electrode includes an uncoated portion exposed outside the separator at the opposite longitudinal end where no active material layer is formed. The uncoated portion functioning as the second electrode tab is referred to as a second uncoated portion 12. The second uncoated portion 12 is provided at the lower side with respect to the height direction of the electrode assembly 10 accommodated in the battery housing 20. At least a portion of the second uncoated portion 12 is used as an electrode tab itself. The second uncoated portion 12 may be, for example, a positive-electrode tab.

The battery housing 20 is a generally cylindrical receptacle having an opening formed on one side and may be made of a conductive metal. The battery housing 20 is configured to receive and accommodate the electrode assembly 10 of the secondary battery. A side surface of the battery housing 20 and a bottom surface located opposite the opening 20a may be formed integrally. In the height direction, the upper side of the battery housing 20 may be open and the lower side closed. The bottom surface of the battery housing 20 may be formed to have a substantially flat shape. The battery housing 20 is configured to receive the electrode assembly 10 and an electrolyte through an opening 20a formed at its top.

The battery housing 20 may include a beading portion 21 formed in an end region adjacent to the opening 20a at its top, and a crimping portion 22 formed on the beading portion 21. The beading portion 21 has a recessed shape formed by pressing an outer circumferential portion of the battery housing 20 inward to a predetermined depth. The beading portion 21 may be pressed inward in an area between the opening 20a of the battery housing 20 and an internal receiving space that accommodates the electrode assembly 10.

The beading portion 21 provides a support surface on which the sealing gasket 50 and the battery cap 40 can be seated. Additionally, the beading portion 21 may provide a support surface on which at least a portion of the periphery of the current collector 30 can be seated and coupled. At least a portion of the edge of the current collector 30, at least a portion of the edge of the sealing gasket 50, and at least a portion of the edge of the battery cap 40 may be seated on an upper surface of the beading portion 21. The beading portion 21 may be formed by pressing the outer circumferential surface of the battery housing 20 inward in a region adjacent to the opening 20a of the battery housing 20, with the electrode assembly 10 accommodated within the battery housing 20 after being inserted through the opening 20a.

To stably support the current collector 30, the battery cap 40, and the sealing gasket 50, an upper surface of the beading portion 21 may extend in a direction substantially parallel to the bottom surface of the battery housing 20, that is, substantially perpendicular to a side wall of the battery housing 20. The beading portion 21 prevents the electrode assembly 10, whose size corresponds to the inner diameter of the internal receiving space of the battery housing 20, from coming out through the opening 20a at the top of the battery housing 20, and functions as a support on which the battery cap 40 and the like are seated.

The crimping portion 22 extends upward from the beading portion 21 and is formed above the beading portion 21. The crimping portion 22 has a bent shape that extends to surround an edge portion and at least part of an upper surface of the battery cap 40 disposed on the beading portion 21. By the crimping portion 22, the battery cap 40 is fixed on the beading portion 21. The crimping portion 22 may extend inward in the radial (centripetal) direction of the battery cell 1 from the upper circumference of the battery housing 20. The crimping portion 22 is provided in a region corresponding to the edge of the upper surface of the battery cap 40, where it fixes the battery cap 40 and prevents the battery cap 40 from detaching upward.

An upper end of the crimping portion 22 extends inward by a predetermined distance along the radial direction of the battery cell 1 and is bent to wrap a portion of the upper surface of the battery cap 40, thereby fixing the perimeter of the upper surface of the battery cap 40. An edge region of the battery cap 40 is interposed between the upper end of the crimping portion 22 and the beading portion 21, is fixed to the battery housing 20, and covers the opening 20a of the battery housing 20.

The current collector 30 is accommodated inside the battery housing 20. The current collector 30 is made of a conductive metal material and can be electrically connected to the electrode assembly 10. The current collector 30 can be electrically connected to the battery housing 20. That is, the current collector 30 may electrically connect the first electrode of the electrode assembly 10 to the battery housing 20. The current collector 30 may include a support portion 31, a tab-joining portion 32, and a housing-joining portion 33.

The support portion 31 and the tab-joining portion 32 of the current collector 30 are disposed above the electrode assembly 10. The support portion 31 is disposed on one surface of the electrode assembly 10. The tab-joining portion 32 extends from the support portion 31 and is joined to a first uncoated portion 11 of the electrode assembly 10. For example, while being seated on the first uncoated portion 11 of the electrode assembly 10, the tab-joining portion 32 may be joined to the electrode assembly 10 by welding over a certain area. The tab-joining portion 32 of the current collector 30 may be located below the lower surface of the beading portion 21.

A through-hole (not shown) may be formed in the current collector 30 to allow flames generated inside the battery cell 1 to be smoothly discharged. Accordingly, even if thermal runaway occurs in the electrode assembly 10, flames and venting gas generated from the electrode assembly 10 can be discharged smoothly through the through-hole without being blocked by the current collector 30 located above the electrode assembly 10. Thus, it is possible to prevent flames from propagating toward the beading portion 21 located near the electrode assembly 10 and the current collector 30, thereby preventing pinholes from being formed in the beading portion 21 and inhibiting the spread of fire to other battery cells 1 adjacent to the battery cell 1 in which the fire occurred.

The support portion 31 may have a current-collector hole (H2) formed at a position corresponding to a winding hole (H1) formed approximately at the center of the electrode assembly 10. The winding hole (H1) and the current-collector hole (H2), which communicate with each other, can serve as a passage for inserting a welding rod or irradiation of a laser beam for welding between an electrode terminal of the electrode assembly 10 and the current collector 30, or between the electrode terminal and a lead tab (not shown).

If the diameter of the current collector hole (H2) is excessively smaller than that of the winding hole (H1), the opening of the winding hole (H1) may become covered, thereby deteriorating electrolyte filling characteristics and failing to secure sufficient space for insertion of a welding device or for laser irradiation. Accordingly, so that the current-collector hole (H2) does not cover the winding hole (H1) formed in the core of the electrode assembly 10, the winding hole (H1) of the electrode assembly 10 may have a diameter substantially the same as or larger than that of the current-collector hole (H2).

The housing-joining portion 33 extends from the support portion 31 toward a peripheral region and is joined to an inner wall surface of the battery housing 20. The housing-joining portion 33 may extend from the support portion 31 and be electrically joined to the inner surface of the battery housing 20. For example, the housing-joining portion 33 may be joined to the upper surface of the beading portion 21, which is part of the inner surface of the battery housing 20.

An inner diameter of the battery housing 20 in a region where the beading portion 21 is formed is smaller than that of the electrode assembly 10. For stable contact and coupling, the beading portion 21 may have a shape extending in a direction substantially parallel to the bottom surface of the battery housing 20, i.e., substantially perpendicular to the side wall of the battery housing 20. The housing-joining portion 33 may be welded to the upper surface of the beading portion 21. Welding for joining the battery housing 20 and the current collector 30 may be performed by, for example, laser welding, ultrasonic welding, or spot welding.

The battery cap 40 is provided to cover the opening 20a of the battery housing 20. The battery cap 40 may be joined to the battery housing 20 to seal the opening 20a of the battery housing 20 through a crimping process using the sealing gasket 50. The battery cap 40 may include a venting portion 41 configured to prevent an increase in internal pressure caused by gas generated inside the battery housing 20.

The venting portion 41 may be configured to rupture when the internal pressure of the battery housing 20 increases above a predetermined level. The venting portion 41 is formed in a part of the battery cap 40 and may be structurally weaker than surrounding regions so as to readily rupture when internal pressure, for example due to thermal runaway, is applied. For example, the venting portion 41 may be an area having a smaller thickness than surrounding regions. The venting portion 41 may be formed as a substantially circular closed loop.

The battery cap 40 covers the opening 20a formed on one side of the battery housing 20. The battery cap 40 may be fixed by the crimping portion 22 formed at the top of the battery housing 20. To improve fixing force and sealing of the battery housing 20, a sealing gasket 50 is interposed between the battery housing 20 and the battery cap 40, and between the current collector 30 and the battery cap 40. Accordingly, the current collector 30 may be interposed between the beading portion 21 of the battery housing 20 and the sealing gasket 50 so as to be positioned therebetween. The current collector 30 interposed between the beading portion 21 and the sealing gasket 50 may be fixed by bending of the crimping portion 22 extending upward from the beading portion 21.

The sealing gasket 50 is provided to surround the battery cap 40 and to hermetically seal a space between the battery cap 40 and the battery housing 20. The sealing gasket 50 serves to maintain airtightness between the battery housing 20 and the battery cap 40. If the sealing performance of the sealing gasket 50 is poor, moisture may penetrate into the battery housing 20 or an electrolyte or gas within the battery housing 20 may leak to the outside through a minute gap between the battery housing 20 and the battery cap 40. Since the sealing gasket 50 is deformed by the crimping process, a sealing force-enhancing structure that takes into account the shape deformation of the sealing gasket 50 due to the crimping process is required.

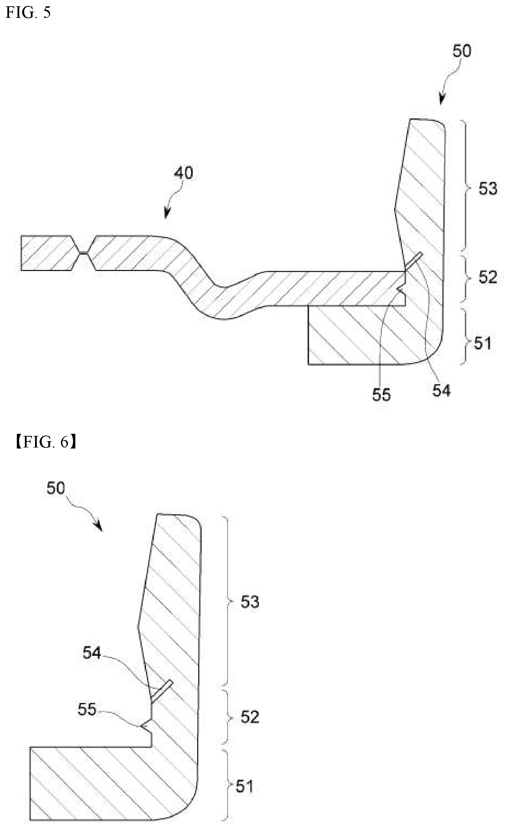

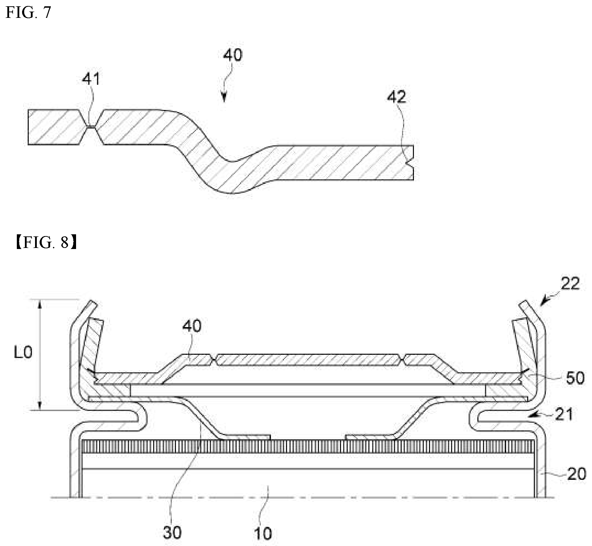

FIG. 4 is an enlarged view of part 'A' of FIG. 3. FIG. 5 is a cross-sectional view showing a sealing gasket and a battery cap constituting a battery cell according to an embodiment of the present disclosure. FIG. 6 is a cross-sectional view showing the shape of a sealing gasket before the crimping process according to an embodiment of the present disclosure. FIG. 7 is a cross-sectional view showing a portion of a battery cap constituting a battery cell according to an embodiment of the present disclosure.

Referring to FIGS. 4 to 7, the sealing gasket 50 has a groove 54 at a portion corresponding to the upper surface corner of the rim of the battery cap 40, that is, at a corner portion between the side formed along the circumferential direction of the battery cap 40 and the upper surface of the rim region of the battery cap 40. The groove 54 is formed in the folded portion of the inner surface of the sealing gasket 50 where the greatest deformation occurs during the crimping process. In order to improve the sealing force while relieving the force applied to the folding portion of the sealing gasket 50 during the crimping process, the groove 54 is formed to be inclined upward in a direction away from the rim of the battery cap 40.

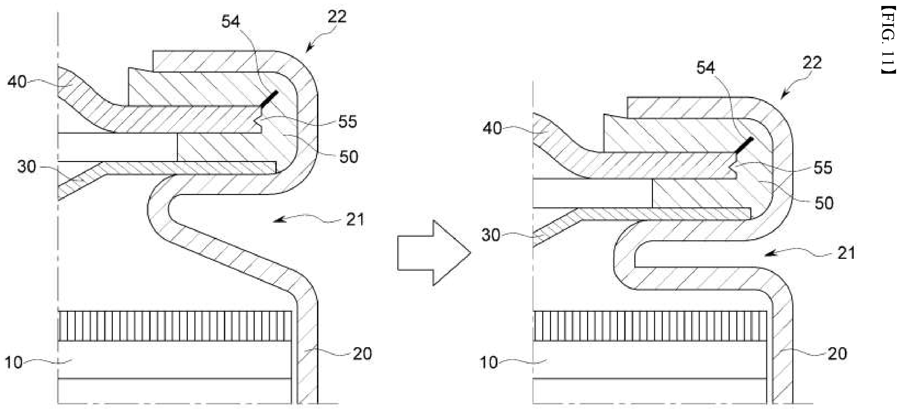

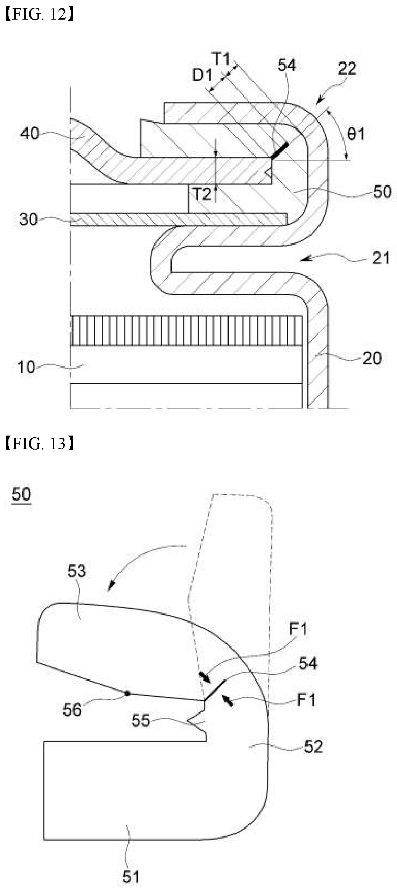

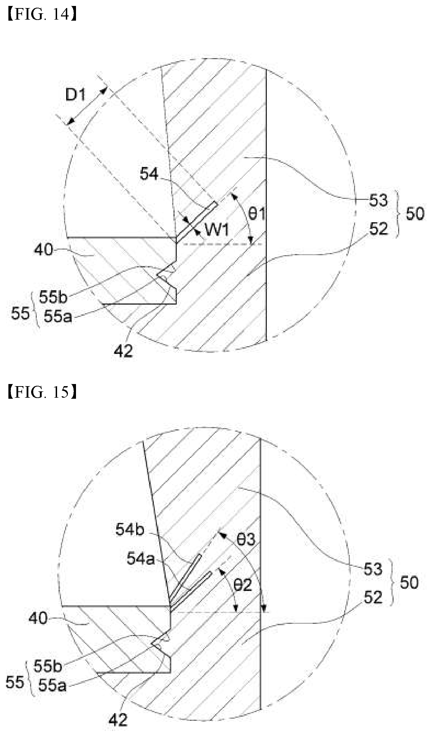

FIGS. 8 to 10 are drawings showing that the shape of a sealing gasket is deformed as a crimping process progresses according to an embodiment of the present disclosure. FIG. 11 is a drawing showing a sizing process in progress according to an embodiment of the present disclosure. FIG. 12 is a drawing for explaining the shape of a groove and a sealing reinforcing protrusion of a sealing gasket constituting a battery cell according to an embodiment of the present disclosure. FIG. 13 is a drawing showing a state in which a sealing gasket constituting a battery cell according to an embodiment of the present disclosure is deformed by a crimping process. FIG. 14 is an enlarged view of a groove portion of a sealing gasket and a sealing reinforcing projection and a sealing reinforcing groove of a battery cap according to an embodiment of the present disclosure.

Referring to FIGS. 4 to 14, the sealing gasket 50 and the upper end of the battery housing 20 are configured to be bent by a crimping process to wrap around the rim of the battery cap 40 (see FIGS. 8 to 10). That is, a crimping process is performed to shape the end of the battery housing 20 extended upward from the beading portion 21 so that the battery housing 20 and the sealing gasket 50 together wrap around the rim of the battery cap 40.

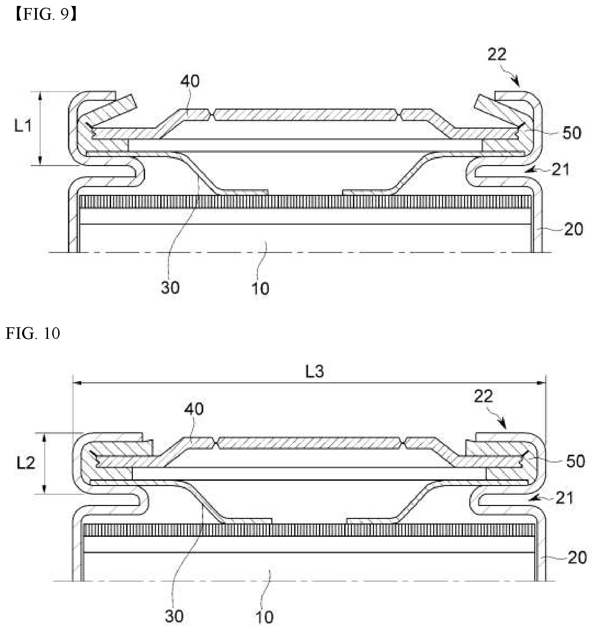

FIG. 8 illustrates the first crimping process, FIG. 9 illustrates the second crimping process, and FIG. 10 illustrates the third crimping process. As the first crimping process, the second crimping process, and the third crimping process are sequentially performed, the height (L0, L1, L2) of the crimping portion 22 from the beading portion 21 to the top of the battery housing 20 is gradually reduced, and the space between the battery cap 40 and the battery housing 20 is sealed via the sealing gasket 50 by the crimping portion 22.

The crimping portion 22 is formed by bending the open end of the battery housing 20 and the upper end of the sealing gasket 50. By the crimping process, the opening 20a of the battery housing 20 is sealed by the bent upper portion of the battery housing 20, the sealing gasket 50, and the battery cap 40. The outer diameter (L3) of the crimping portion 22 can be provided to be approximately the same as the outer diameter of the lower region where the electrode assembly 10 of the battery housing 20 is accommodated.

In order to secure sealing performance, the sealing gasket 50 may include a lower gasket 51, an intermediate gasket 52, an upper gasket 53, a groove 54, and a sealing reinforcing protrusion 55, as shown in FIG. 5. The lower gasket 51, the intermediate gasket 52, the upper gasket 53, and the sealing reinforcing protrusion 55 are terms that refer to the areas of the sealing gasket 50 and are all made of the same material and can form a single sealing gasket 50 that is integrally molded.

The lower gasket 51 may be formed in a circular ring shape to support the lower surface of the rim of the battery cap 40. The lower surface of the rim of the battery cap 40 comes into contact with the upper surface of the lower gasket 51. For this purpose, the inner diameter of the lower gasket 51 may be provided with a diameter smaller than the outer diameter of the battery cap 40. A housing-joining portion 33 of a current collector 30 is interposed between the lower surface of the lower gasket 51 and the upper surface of the beading portion 21. The lower gasket 51 is placed on the lower area side of the crimping portion 22.

The intermediate gasket 52 extends upward from the outer diameter of the lower gasket 51 so as to contact the side of the battery cap 40. The intermediate gasket 52 can be formed perpendicular to the upper surface of the lower gasket 51. The inner diameter of the intermediate gasket 52 is in contact with the outer diameter of the battery cap 40. That is, the inner diameter of the intermediate gasket 52 can be provided with the same diameter as the outer diameter of the battery cap 40. The outer diameter of the intermediate gasket 52 is in contact with the inner diameter of the middle area of the crimping portion 22 of the battery housing 20.

The upper gasket 53 is provided to extend to the upper portion of the intermediate gasket 52. To improve sealing force by taking into account shape deformation during the crimping process, the upper gasket 53 may have a thickness that varies along its length. In one embodiment, the upper gasket 53 may be designed to have a shape in which the thickness gradually increases from the top of the intermediate gasket 52 toward the top and then decreases again.

The upper gasket 53 is a part that is folded and bent inward to wrap around the rim of the battery cap 40 during the crimping process. The connection between the intermediate gasket 52 and the upper gasket 53 corresponds to the part folded by the crimping process. The connection between the intermediate gasket 52 and the upper gasket 53 may be at a position corresponding to the upper surface corner of the rim of the battery cap 40.

The groove 54 may be provided at the connection between the intermediate gasket 52 and the upper gasket 53 so as to seal the battery cap 40 and the battery housing 20 without being affected by deformation during the crimping process. The groove 54 is formed to slope upward from the connection between the intermediate gasket 52 and the upper gasket 53 in a direction away from the rim of the battery cap 40. The groove 54 can be formed in a ring shape that is wider at the top and narrower at the bottom extending along the circumference of the sealing gasket 50.

As described above, in the battery cell 1 according to the embodiment of the present disclosure, as the crimping process progresses, a groove 54 is formed in an upwardly inclined direction in the inner part of the sealing gasket 50 where the sealing gasket 50 and the battery cap 40 are interlocked. According to an embodiment of the present disclosure, the force (reference numeral F1 in FIG. 13) applied to the folded portion during the crimping process by the groove 54 is alleviated, and the force interlocking with the battery cap 40 is improved, while the deterioration of the sealing performance due to the shape deformation of the folded portion during the crimping process can be prevented. Accordingly, the sealing performance by the sealing gasket 50 can be further enhanced.

In order to improve the above-described effect, one end of the groove 54 located on the inner surface of the sealing gasket 50 is arranged to be in contact with the upper surface corner of the rim of the battery cap 40. Considering the shape deformation due to compression of the sealing gasket 50 during the crimping process, the groove 54 can be formed at an angle (θ1) of 30° to 60° with respect to a horizontal plane parallel to the upper surface of the battery cap 40. More preferably, the groove 54 can be formed at an angle of 40° to 50° with respect to the horizontal plane. This is because, since the upper gasket 53 is bent at approximately 90°, when the groove 54 is formed at an angle of approximately 45°, deformation of the sealing gasket 50 due to the crimping process is suppressed, effectively preventing weakening of the sealing performance due to deformation of the sealing gasket 50.

Before and/or after the crimping process, the groove 54 may be formed with a depth (drawing symbol D1 in FIG. 12) from one end thereof to the other end thereof of 30% to 70% of the thickness (drawing symbol T1 in FIG. 12) of the sealing gasket 50 defined based on the direction of the groove 54. It is preferable that the groove depth (D1) of the groove 54 of the sealing gasket 50 be set to a depth of 50% or less of the thickness (T1) of the entire sealing gasket 50. This is to prevent deterioration of sealing performance due to deformation of the sealing gasket 50 by sufficiently cushioning the area where the sealing gasket 50 is deformed during the crimping process by designing the groove depth (D1) of the groove portion 54 to an appropriate length, and at the same time, to maintain sealing performance through the thickness of the sealing gasket 50 by limiting the depth of the groove portion 54.

In the embodiment of FIG. 14, the width (W1) of the groove 54 is formed to be constant along the longitudinal direction of the groove 54, but the width (W1) of the groove 54 may be formed to change along the longitudinal direction of the groove 54. The groove 54 may be formed by a mold during the molding of the sealing gasket 50, or may be formed through a cutting process using a cutting tool or a cutting process using a laser, etc. after the molding of the sealing gasket 50.

The intermediate gasket 52 of the sealing gasket 50 may be provided with a sealing reinforcing protrusion 55 at the lower part of the groove 54. The sealing reinforcing protrusion 55 can be formed to protrude along the inner circumference of the intermediate gasket 52. The sealing reinforcing protrusion 55 can be formed at a position that is in contact with the upper surface of the rim of the battery cap 40 and the side perpendicular to the lower surface of the rim. In one embodiment, the sealing reinforcing protrusion 55 may be provided as a protrusion protruding in a triangular shape from the inner surface of the intermediate gasket 52.

The battery cap 40 may have a sealing reinforcement groove 42 that is engraved and recessed to be form-fitted to a sealing reinforcement protrusion 55 on the side of the battery cap 40. The sealing reinforcement groove 42 can be provided as a groove having the same size and shape as the sealing reinforcement protrusion 55. Accordingly, when the sealing reinforcing protrusion 55 is provided as a triangular protrusion, the sealing reinforcing groove 42 can be provided as a triangular groove. The sealing reinforcing protrusion 55 and the sealing reinforcing groove 42 can be positioned at the center in the thickness direction of the battery cap 40.

The sealing reinforcing protrusion 55 functions to align the battery cap 40 and the sealing gasket 50 during the crimping process and to ensure that the crimping process is performed at an accurate location. Accordingly, the sealing performance can be enhanced by preventing the lifting and abnormal sealing of the sealing gasket 50 by the sealing reinforcing protrusion 55 and the sealing reinforcing groove 42. The vertical size of the sealing reinforcing protrusion 55 may be 10% to 30% of the thickness of the rim portion of the battery cap 40 (drawing symbol T2 in FIG. 12). It is preferable that the size of the sealing reinforcing protrusion 55 be set to 20% or less of the thickness (T2) of the battery cap 40.

The sealing reinforcing protrusion 55 may have a protrusion lower surface 55a that protrudes obliquely with respect to the side surface of the intermediate gasket 52 and a protrusion upper surface 55b that protrudes obliquely with respect to the side surface of the intermediate gasket 52. The protrusion lower surface 55a can be in contact with the lower surface of the sealing reinforcement groove 42 of the battery cap 40, and the protrusion upper surface 55b can be in contact with the upper surface of the sealing reinforcement groove 42 of the battery cap 40. In order to stably maintain the relative positions of the sealing gasket 50 and the battery cap 40, the protruding lower surface 55a and the protruding upper surface 55b may be formed to protrude at an angle of about 30° to 60° with respect to the side surface of the intermediate gasket 52.

The protrusion lower surface 55a and the protrusion upper surface 55b may be formed to be inclined at the same angle with respect to the side surface of the intermediate gasket 52, or may be formed to protrude at different angles. For example, for the side surface of the intermediate gasket 52, the protrusion lower surface 55a can be formed at a gentler angle than the protrusion upper surface 55b. In this case, the sealing reinforcing protrusion 55 of the sealing gasket 50 can be inserted more smoothly into the rim of the battery cap 40. In addition, since the upper surface of the protrusion 55b is formed at a greater angle of inclination with respect to the side surface of the intermediate gasket 52 than the lower surface of the protrusion 55a, the upper surface of the protrusion 55b of the sealing reinforcing protrusion 55 of the sealing gasket 50 can be maintained in a state of being caught on the upper surface of the sealing reinforcing groove 42, and accordingly, the sealing gasket 50 can be more reliably prevented from being lifted during the crimping process.

The sealing reinforcement groove 42 can be formed to be sunken at the same angle as the lower surface 55a and the upper surface 55b of the sealing reinforcement protrusion 55. The sealing reinforcing protrusion 55 can be formed integrally during the molding of the sealing gasket 50. The sealing reinforcement groove 42 can be formed during the manufacturing of the battery cap 40, or can be formed by cutting the side portion of the battery cap 40 after manufacturing the battery cap 40.

FIG. 15 is a drawing showing a groove portion of a sealing gasket according to another embodiment of the present disclosure. Referring to FIG. 15, the sealing gasket 50 may have two or more grooves 54a, 54b. The plurality of grooves 54a, 54b may include a first groove 54a and a second groove 54b. Before the crimping process, the first groove 54a can be formed at a first angle θ2 with respect to the horizontal direction, and the second groove 54b can be formed at a second angle θ3 greater than the first angle θ2 with respect to the horizontal direction.

The first angle θ2 of the first groove 54a may be 15° to 45°, and the second angle θ3 of the second groove 54b may be 45° to 75°. The angle between the plurality of grooves 54a, 54b can be 20° to 40°. According to the embodiment of FIG. 15, the sealing performance deterioration due to deformation during the crimping process of the sealing gasket 50 can be more effectively prevented by the plurality of grooves 54a, 54b. In the illustrated example, two grooves 54a, 54b are formed in the sealing gasket 50, but three or more grooves may be formed at different angles in the sealing gasket 50.

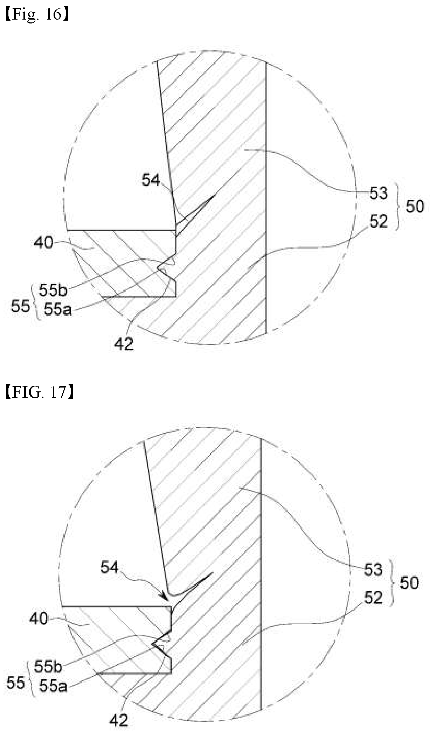

FIG. 16 and FIG. 17 are drawings showing a groove portion of a sealing gasket according to another various embodiment of the present disclosure. The groove 54 of the sealing gasket 50 illustrated in FIGS. 16 and 17 is different from the previously described embodiments in that the width of the groove 54 changes along the depth direction before the crimping process. The width of the groove 54 may decrease linearly as shown in FIG. 16 or nonlinearly as shown in FIG. 17 as the depth of the groove 54 increases.

During the crimping process, the inner side of the sealing gasket 50 is folded, and a strong compressive force is applied to the inner side of the sealing gasket 50. In this way, considering that the compressive force acts differently along the thickness direction of the sealing gasket 50 during the crimping process, by changing the width of the groove 54 along the depth direction, the deformation of the sealing gasket 50 can be effectively absorbed. Accordingly, according to the embodiments of FIGS. 16 and 17, the width of the groove 54 is designed differently depending on the depth of the groove 54, so that it is possible to effectively prevent deterioration of sealing performance in response to deformation that occurs differently depending on the depth of the groove 54 during the crimping process.

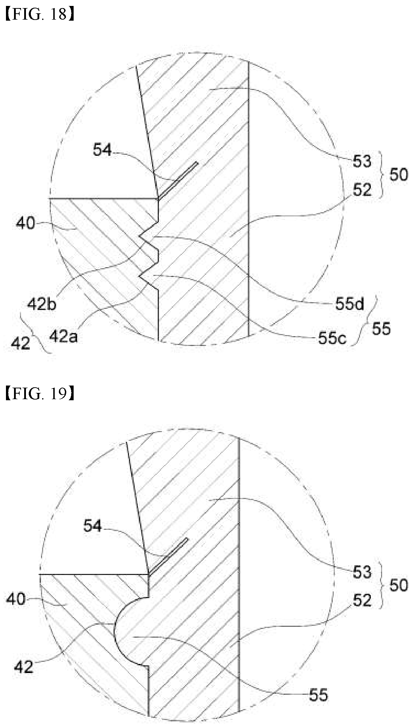

FIG. 18 is a drawing for explaining a sealing reinforcing protrusion of a sealing gasket according to another embodiment of the present disclosure. Referring to FIG. 18, the sealing gasket 50 may have a plurality of sealing reinforcing protrusions 55c, 55d. The first sealing reinforcing protrusion 55c may be formed to protrude in the lower side region of the intermediate gasket 52, and the second sealing reinforcing protrusion 55d may be formed to protrude in the upper side region of the intermediate gasket 52 so as to be positioned above the first sealing reinforcing protrusion 55c.

Additionally, the sealing reinforcement groove 42 of the battery cap may be formed in multiple numbers to correspond to the sealing reinforcement protrusion 55 of the sealing gasket 50. The first sealing reinforcing groove 42a may be formed in a concave shape corresponding to the first sealing reinforcing protrusion 55c, and the second sealing reinforcing groove 42b may be formed in a concave shape corresponding to the second sealing reinforcing protrusion 55d. According to the embodiment of FIG. 18, the position of the sealing gasket 50 can be more reliably maintained during the crimping process by a plurality of sealing reinforcing protrusions 55c, 55d and a plurality of sealing reinforcing grooves 42a, 42b, so that the crimping process can be performed with the sealing gasket 50 in the correct position.

FIG. 19 is a drawing for explaining a sealing reinforcing protrusion of a sealing gasket and a sealing reinforcing groove of a battery cap according to another embodiment of the present disclosure. Referring to FIG. 19, the sealing reinforcing protrusion 55 of the sealing gasket 50 and the sealing reinforcing groove 42 of the battery cap 40 may be designed to have a shape such as a semicircular cross-section, an oval cross-section, etc. in addition to the triangular protrusion formation. In addition, the sealing reinforcing protrusion 55 and the sealing reinforcing groove 42 may be formed in an asymmetrical structure in addition to a structure that is symmetrical in the vertical direction.

During the crimping process, the upper gasket 53 of the sealing gasket 50 is pressed inward and bent. According to the crimping process, the sealing reinforcing protrusion 55 of the sealing gasket 50 is inserted into the sealing reinforcing groove 42 and is maintained in a sealed state. In order to more reliably maintain a tight seal between the sealing gasket 50 and the battery cap 40, it is preferable that a sealing reinforcing protrusion 55 be formed on the sealing gasket 50 and a sealing reinforcing groove 42 be formed on the battery cap 40, but it is also possible that a sealing reinforcing groove be formed on the sealing gasket 50 and a sealing reinforcing protrusion be formed on the battery cap 40.

In another embodiment of the present disclosure, a first sealing reinforcing protrusion and a first sealing reinforcing groove may be formed on the inner surface of the sealing gasket 50, and a second sealing reinforcing groove coupled with the first sealing reinforcing protrusion of the sealing gasket 50 and a second sealing reinforcing protrusion coupled with the first sealing reinforcing groove of the sealing gasket 50 may be formed on the outer surface of the battery cap 40.

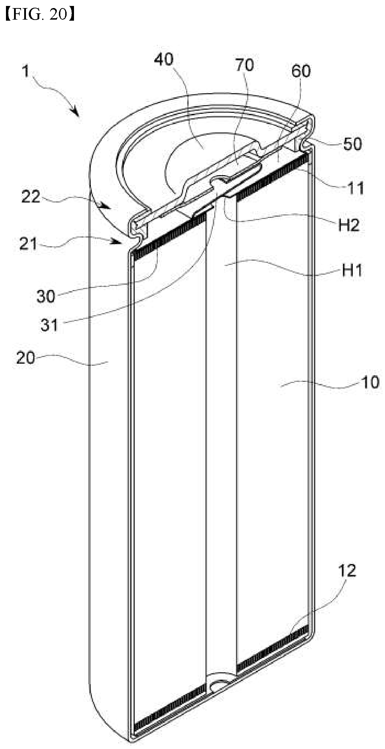

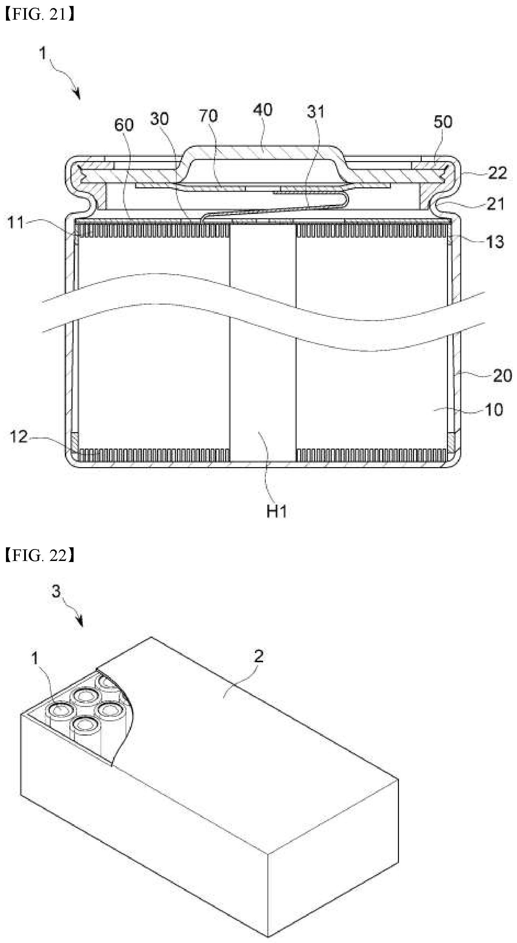

FIG. 20 is a cutaway perspective view of a battery cell according to an embodiment of the present disclosure. FIG. 21 is a cross-sectional view of the battery cell according to the embodiment of FIG. 20. The groove of the sealing gasket, the sealing reinforcing protrusion, and the sealing reinforcing groove of the battery cap constituting the battery cell according to FIGS. 20 and 21 are similar to those of the previously described embodiment, so that duplicate descriptions of components substantially the same as or similar to those of the previous embodiment are omitted, and the description focuses on differences from the previous embodiment.

In the battery cell 1 of FIGS. 20 and 21, the current collector 30 is electrically connected to the battery cap 40. A lead 34 can be connected to the current collector 30, and the lead 34 can extend upward and be directly connected to the battery cap 40 or connected to a connecting plate 70 that is connected to the lower surface of the battery cap 40. Accordingly, the battery cap 40 can have the same first polarity as the first uncoated portion 11 and can function as a first electrode terminal. A separator 13 may be provided on the outer circumferential surface of the electrode assembly 10 for insulation from the battery housing 20.

An insulating plate 60 is placed between the top of the electrode assembly 10 and the beading portion 21 or between the current collector 30 coupled to the top of the electrode assembly 10 and the beading portion 21 to prevent contact between the first uncoated portion 11 and the battery housing 20 or between the current collector 30 and the battery housing 20. The insulating plate 60 has a lead hole through which a lead 34 extending upward from the current collector 30 or from the first electrode tab can be drawn out. The lead 34 can be extended upward through the lead hole and connected to the lower surface of the connecting plate 70 or the lower surface of the battery cap 40.

The battery cap 40 can be made of a conductive metal material. The battery cap 40 can be configured to cover the upper opening of the battery housing 20. The battery cap 40 can be electrically connected to the first electrode of the electrode assembly 10. Additionally, the battery cap 40 can be electrically insulated from the battery housing 20. Accordingly, the battery cap 40 has the same first polarity as the first electrode of the electrode assembly 10 and can function as a first electrode terminal of the cylindrical battery cell 1. The electrical connection between the first electrode and the battery cap 40 can be made, for example, by a current collector 30 and/or a lead 34.

The battery cap 40 can be formed to protrude upward from approximately the center thereof. More specifically, the approximate central portion of the battery cap 40 may be configured to protrude upward. The battery cap 40 can be provided at a position corresponding to the winding center hole formed at approximately the center of the battery cell 1. The battery cap 40 may protrude upwards higher than the upper surface of the battery housing 20 to facilitate contact with electrical connection components such as a bus bar.

A sealing gasket 50 is interposed between the battery cap 40 and the crimping portion 22 of the battery housing 20, which seals the upper opening of the battery housing 20 and electrically insulates between the battery housing 20 and the battery cap 40. The sealing gasket 50 may include a material having insulating and elastic properties. The sealing gasket 50 may include, for example, a polymer resin.

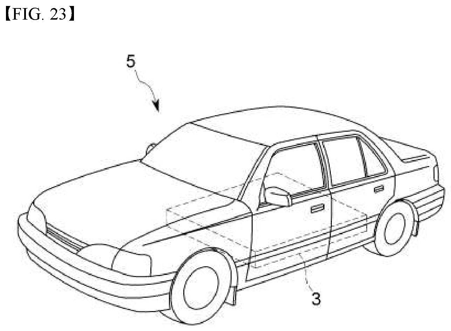

FIG. 22 is a view illustrating a battery pack including the battery cell according to an embodiment of the present disclosure. Referring to FIG. 22, a battery pack 3 according to an embodiment of the present disclosure includes a battery assembly in which a plurality of battery cells 1 according to one embodiment of the present disclosure as described above are electrically connected, and a pack housing 2 accommodating the same. FIG. 23 is a view for explaining a vehicle including the battery pack of FIG. 22.

Referring to FIG. 23, a vehicle 5 according to an embodiment of the present disclosure may be, for example, an electric vehicle, a hybrid vehicle, or a plug-in hybrid vehicle, and may include the battery pack 3 according to one embodiment of the present disclosure. The vehicle 5 may include a four-wheeled vehicle and a two-wheeled vehicle. The vehicle 5 operates by receiving power from a battery pack 3 according to one embodiment of the present disclosure.

While the present disclosure has been described with reference to the limited embodiments and drawings, the present disclosure is not limited thereto, and it will be understood by those of ordinary skill in the art that various modifications and variations may be made within the technical spirit of the present disclosure and the equivalent scope of the claims set forth below.

## Claims

1. A battery cell comprising: a battery housing configured to accommodate an electrode assembly of a secondary battery and having an opening at one side;
a battery cap coupled to the battery housing to cover the opening of the battery housing; and
a sealing gasket surrounding the battery cap to seal a space between the battery cap and the battery housing, wherein
the sealing gasket and an upper end of the battery housing are configured to be bent by a crimping process to wrap around a rim of the battery cap, and wherein
the sealing gasket has a groove in a portion corresponding to an upper surface corner of the rim of the battery cap.

2. The battery cell of claim 1, wherein
the groove is formed to be inclined upward in a direction away from the rim of the battery cap.

3. The battery cell of claim 1, wherein
one end of the groove located on the inner surface of the sealing gasket is in contact with the upper surface corner of the rim of the battery cap.

4. The battery cell of claim 3, wherein
the groove is formed at an angle of 30° to 60° with respect to a horizontal plane parallel to the upper surface of the battery cap.

5. The battery cell of claim 4, wherein
the groove is formed with a depth from one end to the other end of 30% to 70% of the thickness of the sealing gasket defined based on the direction of the groove.

6. The battery cell of claim 1, wherein
the sealing gasket has a plurality of grooves at a portion corresponding to the upper surface corner of the rim of the battery cap, wherein
the plurality of grooves include a first groove and a second groove formed above the first groove, and wherein,
based on a state before the crimping process, the first groove is formed at a first angle with respect to a horizontal direction, and
the second groove is formed at a second angle greater than the first angle with respect to the horizontal direction.

7. The battery cell of claim 1, wherein
the width of the groove changes along a depth direction of the groove based on a state before the crimping process.

8. The battery cell of claim 7, wherein
the width of the groove decreases linearly as the depth increases from the inner surface of the sealing gasket.

9. The battery cell of claim 7, wherein
the width of the groove decreases non-linearly as the depth increases from the inner surface of the sealing gasket.

10. The battery cell of claim 1, wherein
the sealing gasket has a sealing reinforcing protrusion formed to protrude along the inner circumference of the sealing gasket below the groove

11. The battery cell of claim 10, wherein
the sealing reinforcing protrusion is formed at a position in contact with a side perpendicular to the upper surface and lower surface of the rim of the battery cap.

12. The battery cell of claim 11, wherein
the vertical dimension of the sealing reinforcing protrusion is 10% to 30% of the thickness of the rim portion of the battery cap.

13. The battery cell of claim 11, wherein
the battery cap has a sealing reinforcing groove formed as a recess on a side surface of the battery cap to be form-fitted to the sealing reinforcing protrusion.

14. The battery cell of claim 13, wherein
the sealing gasket has a plurality of sealing reinforcing protrusions along the inner circumference of the sealing gasket, and wherein
the plurality of sealing reinforcing protrusions include a first sealing reinforcing protrusion and a second sealing reinforcing protrusion formed above the first sealing reinforcing protrusion.

15. The battery cell of claim 14, wherein
wherein the battery cap has a plurality of sealing reinforcing grooves on the side surface of the battery cap, and wherein
the plurality of sealing reinforcing grooves include:
a first sealing reinforcing groove formed in a concave shape at a position corresponding to the first sealing reinforcing protrusion; and
a second sealing reinforcing groove formed in a concave shape at a position corresponding to the second sealing reinforcing protrusion.

16. The battery cell of claim 1, wherein
the battery cap has a sealing reinforcing protrusion formed to protrude along an outer circumference of a side surface of the battery cap, and wherein
the sealing gasket has a sealing reinforcing groove formed as a recess along the inner circumference to be form-fitted to the sealing reinforcing protrusion.

17. A battery pack comprising at least one battery cell according to claim 1.

18. A sealing gasket applied to a battery cell having a battery housing that accommodates an electrode assembly and a battery cap that covers an opening of the battery housing, the sealing gasket comprising:
a lower gasket having a circular ring shape to support a lower surface of a rim of the battery cap;
an intermediate gasket extending upward from an outer diameter portion of the lower gasket so as to contact a side surface of the battery cap and formed perpendicular to an upper surface of the lower gasket;
an upper gasket provided to extend above the intermediate gasket and having a thickness that changes in a vertical direction; and
a groove provided at a connection portion between the intermediate gasket and the upper gasket to seal a space between the battery cap and the battery housing, wherein
the upper gasket is configured to be bent to wrap around the rim of the battery cap by a crimping process, and wherein
the groove is formed to extend from an inner surface of the sealing gasket toward an inside of the sealing gasket at a portion corresponding to an upper surface corner of the rim of the battery cap.

19. The sealing gasket of claim 18, wherein
the groove is formed to slope upward from the inner surface of the sealing gasket toward the inside of the sealing gasket.

20. The sealing gasket of claim 18, wherein
the intermediate gasket has a sealing reinforcing protrusion formed to protrude along the inner circumference of the intermediate gasket below the groove.
